# EUROPEAN PATENT SPECIFICATION

(11) **EP 2 709 113 B1**
(45) Date of publication and mention of the grant of the patent: **22.11.2017**
(21) Application number: 13184916.8
(22) Date of filing: 18.09.2013
(51) Int. Cl.: H01B 3/44, H01B 7/18, H01B 7/28, H01B 5/10, H01B 7/22, H01B 9/02

(54) **SUBTERRANEAN CABLE**
UNTERIRDISCHES KABEL
CÂBLE SOUS-TERRAIN

(30) Priority: 18.09.2012 GB 201216685; 20.12.2012 GB 201223227
(43) Date of publication of application: 19.03.2014
(73) Proprietor: BPP Cables Ltd, London EC2V 5DE (GB)
(72) Inventor: Patel, Darren Lindsay, Billericay, Essex CM12 0EH (GB)
(74) Representative: Turner, Craig Robert

(56) References cited:
- EP-A1- 0 670 577
- EP-A1- 0 930 622
- EP-A2- 0 938 101
- US-A1- 2007 158 095
- US-A1- 2010 147 505

## Description

The present invention relates to a cable for conducting electricity and carrying tension, and is particularly useful for subterranean applications. The invention also relates to an insulation layer to electrically insulate the conductor component of such cables.

### Background

Devices are routinely placed in wellbores during the course of oil exploration or production. Such devices are often powered by electricity, which is transmitted by power cables from the surface. Devices include monitoring devices (to provide information regarding the subterranean formations surrounding the wellbore) and pumps (to aid in pumping oil to the surface).

The downhole environment and the power requirements of the devices present a number of challenges when providing such cables. For instance, the downhole environment may be corrosive (for instance, the environment may exhibit extremes of pH's, or may be oxidative or reductive, for instance, if hydrogen sulphide is present), and thus cables need to be resistant to such challenges. Downhole temperatures can vary with depth; typically temperatures increases with increasing depth, meaning the components of the cable must function properly in a wide range of temperatures. If the power cable is also used to suspend, or lower and lift devices into and out of the wellbore, the power cable must be strong enough to support the devices. Not only must such cables be strong enough to support the devices, an important consideration is that they must be strong enough to support their own weight: where the depth of wellbore is several hundreds, if not thousands of meters long, the self-weight of the cable itself may be substantial. The cable must also be mechanically robust and resilient so that an operator can use it in the field repeatedly without concern that it will fail. Most importantly, the cable must be capable of providing sufficient electrical power to any device downhole. Finally, wellbore environments are typically restricted in terms of space, which in turn places restrictions on the maximum allowable cable diameter. A typical wellbore may have an inner diameter as small as around 5 inches, and the maximum diameters of cables
are typically restricted to a fraction of the wellbore diameter. These requirements, taken together, present challenges when providing cables suitable for use downhole.

### Summary of the Invention

The present invention provides a cable comprising a first conductor, a first insulator layer and a first plurality of wires, wherein the first conductor, the first insulator and the first plurality of wires extend along an longitudinal axis of the cable, wherein the first insulator layer is axially external to the conductor, and the first plurality of wires is axially external to the first insulator, and wherein the first insulator layer comprises a first fluoropolymer wherein the first plurality of wires consists of an alloy comprising nickel, chromium and optionally up to 20 % (w/w) additives or impurities Further the present invention provides a method of manufacturing a cable of the invention, comprising disposing the first insulator layer around the first conductor and along a longitudinal axis thereof, and disposing the first plurality of wires around the first insulator layer and along a longitudinal axis thereof, wherein the first insulator layer comprises the first fluoropolymer.

In addition the present invention provides a method of transmitting electricity, comprising connecting a first installation or device with a second installation or device with a cable according to the present invention, and transmitting electricity from the first installation or device to the second installation or device through the cable, wherein the first installation or device is in a wellbore. Further the present invention provides a method of suspending a first device or installation in a wellbore, comprising providing a cable of the invention, securing a first end of the cable to the first device or installation, securing a second end of the cable to a second device or installation, and suspending the first device or installation in the wellbore.

Further features are defined in the dependent claims.

### Description

The present invention relates to a cable for conducting electricity, in particular, for cables used in subterranean applications. The invention also relates to an insulation layer to insulate the conductor component of such cables. The cables of the present invention are particularly useful for providing DC (direct current) electricity to downhole devices, but may equally be used for convey AC (alternative current) electricity.

The cable may be used to power any downhole device that uses electricity, and is particularly useful for powering ESP's (electrical submersible pumps). The present invention is particularly useful when configured as a DC cable for powering ESP's, since it is believed that no DC ESP cables are currently thought to be available. The cable of the present invention is capable of operating at around 5kV to 6kV, with a current carrying capacity of 100A. The cable can also be subjected to relatively high temperatures. For instance, the cable may be used in downhole temperatures of up to 80°C, up to 90°C, up to 100°C, up to 120°C, up to 130°C, up to 140°C, or up to 150°C. Further, the cable may be used in corrosive environments, for instance, in low or high pH's, or in oxidative or reductive environments. For instance, the cable is able to tolerate exposure to hydrogen sulphide of around 4%-6% (mol). The cable may also be subjected to working loads of at least 10,000lbs (44.5kN). In a particularly preferred embodiment, present invention provides a DC cable for powering an ESP.

The cable of the present invention comprises a first conductor, a first insulator layer and a first plurality of wires, wherein the first conductor, the first insulator and the first plurality of wires extend along an longitudinal axis of the cable, wherein the first insulator layer is axially external to the conductor, and the first plurality of wires is axially external to the first insulator, and wherein the first insulator layer comprises a first fluoropolymer.

International standard IEC 60287 (set out by the International Electrotechnical Commission) provides ampacity calculations for the sizes of the central and return conductors for medium-voltage and high voltage power cables of various construction types. The first conductor of the present invention is sized to allow for sustained and safe level of current which does not lead to overheating of the cable, so that the maximum allowable operating temperature is not exceeded. Overheating can lead to a number of problems, such as premature degradation and break down of the insulation layers. Other factors which determine conductor sizing include the operating environment, expected number of flex cycles during operation, mechanical capacity, the cable type and its service conditions.

When the conductor is energized, heat is generated within the cable due to the electrical losses of the conductor, the dielectric losses in the insulation and the losses in the metallic elements of the cable. The size and ampacity of the cable is dependent on the way the heat is transmitted to the cable surface and ultimately dissipated to the surrounding environment. The rate of heat dissipation is dependent on the various thermal resistances of the cable materials and on the external medium and ambient temperature. If the cable is able to dissipate more heat, the conductors can be smaller for a given current carrying capacity.

The normal maximum continuous rating of the cable is dependent on a number of factors. The most important of these is the maximum permissible conductor temperature rise (above ambient temperature). The maximum current rating is the loading (in amperes) which, when applied continuously until steady state conditions are reached, will produce the maximum allowable conductor temperature. Steady state is reached when the rate of heat generation in the cable is equal to the rate of heat dissipation from the cable's surface. This state is the primary condition considered when calculating current rating. The resistance of the first conductor should be as low as possible to minimize power losses from the conductors.

In an embodiment, the first conductor and/or the second comprises copper or copper alloy. Copper has many excellent properties that make is a suitable material for a conductor, such as excellent conductivity and mechanical strength, and thus is the most preferred material for use as the first or second conductor. Different grades of copper may be used if desired (e.g. UNS C11000 or C10300 - note "UNS" stand for "unified numbering system"). Copper alloys such as copper beryllium alloys (e.g. UNS C17000), copper brass alloys (e.g. UNS C26000), copper nickel alloys (e.g. UNS C71500 or C71640), copper aluminium brasses (e.g. UNS C68800) may also be used for the first or second conductors. Such alloys may provide slightly improved mechanical characteristics (such as higher tensile and fatigue strengths), but may do so at the expense of slightly lower thermal and electrical conductivities, or increased cost (This is accurate and correct to say). The skilled person will appreciate whether copper or a copper alloy should be used in the cable of the present invention.

The first and/or second conductor may be formed of a single strand (also known as a solid core), or a plurality of stranded wires. The plurality of stranded wires is preferred, due to its improved flexibility and improved resistance to fatigue compared to solid core configurations. The plurality of wires may also be braided, since braids may further improve the resistance of the conductor to fatigue. In particular, the braid configuration provides good electrical and mechanical performance, at the same time exhibiting good resistance forces generated from repeated pulling and relaxing of the cable that can occur during operation.

The first insulation layer of the present invention comprises a fluoropolymer. In an embodiment, the first insulation layer may also consist of the fluoropolymer - that is to say, in this embodiment, the first layer may be formed of entirely from the first fluoropolymer. The first insulation layer serves to insulate and electrically isolate the first conductor from other components of the cable, such as the second conductor. The insulation thickness should be sufficient to sustain the electrical stresses developed during cable operation.

Electrical field distribution depends on the specific conductivity of the insulation, which itself is highly dependent on the temperature and electric field. The highest electrical stress develops in the insulation region closest to the conductor, as the electric field drives the stress distribution while the cable carries no load. As the cable is subjected to full load, a temperature gradient develops, and this affects the electrical stress much more than the electrical field previously did. As a result of a temperature rise near the conductor, the electrical stress exhibits a tendency for an increase at the outer radius of the insulation and a decrease in the insulation region closer to the conductor.

The fluoropolymers of the present invention will now be described. It will be appreciated that any description of fluoropolymer provided herein applies equally to the second, third and fourth fluoropolymers as well as the first fluoropolymer.

Fluoropolymers are polymers based on fluorocarbons, which comprise strong carbon-fluorine bonds. Such polymers exhibit high resistance to solvents, acids and bases, as well as a good resistance to high temperatures. Some fluoropolymers are known for their non-stick and friction-reducing properties. The best known example of a fluoropolymer is polytetrafluoroethylene, commercially available as Teflon^{tm}, which is commonly used as a non-stick coating for cookware. As used herein, the term "fluoropolymer" means any molecule comprising at least one repeating structural unit, where the at least one structural unit comprises at least one carbon-fluorine bond. Each structural unit is preferably covalently bonded to another structural unit. A typical fluoropolymer comprises a backbone of repeating -(CR₁R₂-CR₃CR₄)- structural units, where at least one of R₁ to R₄ is a fluorine atom. Provided at least one of R₁ to R₄ is a fluorine atom, possible moieties for the other R₁ to R₄ (i.e. the ones that are not fluorine) may be individually selected from -H, -CH₃, -CF₃, -Cl, -CCl₃, -OCH₃, -OCF₃, -OCF₂CF₃, -OCF₂CF₂CF₃, and -OCF₂CF₂ CF₂CF₃. Each of the repeating structural units can be identical, Alternatively, there can be two, three or more distinct structural units; where there are two or more structural units, the resulting polymer is typically called a copolymer.

The molecular sizes of the fluoropolymers of the present invention may vary, but are sufficiently large such that they are solid at the temperatures at which the cables of the present invention operate. The minimum melting temperatures of any fluoropolymer for use with the invention maybe 225°C, 230 °C, 235 °C, 240 °C, 245 °C, 250 °C, 255 °C, or higher.

In an embodiment, the fluoropolymer is a polymer consisting of one monomer. In another embodiment the fluoropolymer is a copolymer comprising two different monomers. In another embodiment, the fluoropolymers may comprise three, four or more different monomers.

The first insulator layer of the cable comprises a first fluoropolymer. In another embodiment, the first insulator layer of the cable consists of a first fluoropolymer. The first fluoropolymer may comprise, or consist of, a first monomer. The first monomer may be selected from a group consisting of 1,1,2,2-tetrafluoroethylene, 1-fluoroethylene, 1,1-difluoroethylene, 1,2-difluoroethylene, 1,1,2-trifluoroethylene, hexafluoropropene, perfluoropropyl vinyl ether, perfluoroethyl vinyl ether, perfluoromethyl vinyl ether, perfluorobutyl ether, 1-chloro-1,2,2-trifluoroethylene, 1,1 dichloro 2,2, difluoroethylene, 1,2 dichloro 1,2, difluoroethylene, 1,1,2-trichloro-2-fluoroethylene, and hexafluoropropylene.

The first fluoropolymer may further comprise a second monomer. In another embodiment, the first fluoropolymer may consist of a first and a second fluoropolymer. The second monomer may be selected from a group consisting of ethylene, propylene, 1,1,2,2-tetrafluoroethylene, 1-fluoroethylene, 1,1-difluoroethylene, 1,2-difluoroethylene, 1,1,2-trifluoroethylene, hexafluoropropylene, perfluoropropyl vinyl ether, perfluoroethyl vinyl ether, perfluoromethyl vinyl ether, perfluorobutyl ether, 1-chloro-1,2,2-trifluoroethylene, 1,1 dichloro 2,2, difluoroethylene, 1,2 dichloro 1,2, difluoroethylene, 1,1,2-trichloro-2-fluoroethylene and hexafluoropropylene.

In a preferred embodiment, the first fluoropolymer consists of two alternating monomers of ethylene and 1,1,2,2-tetrafluoroethylene, given by the structure (-CH₂-CH₂-CF₂-CF₂-)ₙ. The fluoropolymer is also known as ETFE, or poly(ethylene-co-tetrafluoroethylene). This fluoropolymer is commercially available under the brand names Tefzel ^{tm}, Fluon ^{tm}, Neoflon ^{tm} and Texlon ^{tm}. ETFE exhibits a number of desirable properties, including a high melting temperature and high chemical resistance. In another preferred embodiment, the first fluoropolymer consists of one monomer of 1,1,2,2-tetrafluoroethylene. The structure of this polymer is (-CF₂-CF₂-)ₙ, and is known as poly(1,1,2,2-tetrafluoroethylene), or PTFE.

The use of a fluoropolymer in the first insulation layer (or in the second insulation layer) is unusual. This is because such materials are not typically used as insulators, since there are other insulator materials which are normally used. Usually synthetic rubber based materials such as PVC (polyvinyl chloride) or EPDM (ethylene propylene diene monomer) are used, since they provide acceptable insulation capabilities in most circumstances, but at a much reduced cost compared to fluoropolymers. However the surprising discovery has been made that fluoropolymers (in particular, PTFE and ETFE) provide better electrical insulation at a broader temperature range (in particular, at elevated temperatures). Further, fluoropolymers (especially ETFE and PTFE) exhibit an improved decomposition temperature, durability and chemical resistance compared to known insulators, which in turn allows for a higher conductor temperature, which in turn allows for a greater steady state current. The higher resistance to thermal and chemical degradation also contributes to a reduced degradation of the insulating layer, thereby leading to an improved longevity of the cable itself. This higher resistance is also thought to allow the cable of the present invention, when used as an ESP cable, to be deployed downhole for relatively long periods compared to existing ESP cables.

Since the electrical insulating capabilities of the insulating layers are improved at higher temperatures, the present invention in turn allows for a thinner insulation layer than previously possible. Further, fluoropolymer insulation provides higher hoop (circumferential) strength to the cable core than rubber insulation. This allows for a thinner insulation layer and in some cases removal of braided reinforcement which in turn allows for an improved capability of the cable to dissipate heat from the first conductor in the core of the cable, as well as allowing for a thicker central core conductor for a given diameter of cable (i.e. since the maximum diameter of the cable is limited due to the constraints imposed by the limited space of the wellbore, if a lower proportion of the diameter is taken up by the insulator, then other components such as the conductor can occupy a greater proportion of the diameter). The combination of a thinner insulation layer and a thicker conductor core together provides an improvement in the ampacity of the cable.

In addition, fluoropolymers exhibit other desirable characteristics making them suited for use as insulation for downhole cables. This includes low dielectric loss; good resistance to stress cracking; good resistance to chemicals; excellent mechanical properties, such as high tensile strength, 'cut-through' resistance, and low creep. Fluoropolymers exhibit an ideal level of stiffness that means it is not too stiff, such that the cable has enough flexibility for use, but not too flexible and soft, such that the insulation material does not extrude through the armour wires when the cable is under tension. Furthermore, fluoropolymers retain these properties at the higher temperatures, which means these advantages are seen across the range of temperatures seen downhole. ETFE is the a particularly advantageous fluoropolymer for use with the invention in this regard.

The fluoropolymers used in any layer of any embodiment of the invention may be foamed or non-foamed. Foaming the fluoropolymers may reduce costs by reducing the amount of material used. However, the fluoropolymers used with the invention are preferably non-foamed, since the advantages listed above may be reduced to some extent when the fluoropolymer is foamed.

Note the cables of the present invention may need to be deployed in wellbores with diameter as low as 4.9 inches (12.5 cm), or even smaller, meaning the cables need to be as small as possible.

The cable may further comprise a second conductor, wherein the second conductor extends along the longitudinal axis of the cable and is axially external to the first insulator. This second conductor preferably serves as a return conductor. The return conductor may provide a low DC resistance path for the electrical current running through the central conductor (if the cable is used to conduct DC current). The return current may flow through the second conductor at a lower voltage. The return conductor may also carry any fault current loads. In a preferred embodiment, the second conductor comprises a plurality of wires. This plurality of wires may be arranged to provide a layer surrounding the first insulator layer. In a preferred embodiment, the plurality of wires is braided.

In an embodiment, the cable further comprising a second insulator layer comprising a second fluoropolymer wherein the second insulator layer extends along the longitudinal axis of the cable and is axially external to the second conductor. The second insulator layer serves to insulate the second conductor from the other components of the cable axially external to the second conductor, such as the external armour or the surrounding environment.

The second insulator layer of the cable comprises a second fluoropolymer. In another embodiment, the second insulator layer of the cable consists of a second fluoropolymer. The second fluoropolymer may comprise, or consist of, a third monomer. The third monomer may be selected from a group consisting of 1,1,2,2-tetrafluoroethylene, 1-fluoroethylene, 1,1-difluoroethylene, 1,2-difluoroethylene, 1,1,2-trifluoroethylene, hexafluoropropene, perfluoropropyl vinyl ether, perfluoroethyl vinyl ether, perfluoromethyl vinyl ether, perfluorobutyl ether, 1-chloro-1,2,2-trifluoroethylene, 1,1 dichloro 2,2, difluoroethylene, 1,2 dichloro 1,2, difluoroethylene, 1,1,2-trichloro-2-fluoroethylene, and hexafluoropropylene.

The second fluoropolymer may further comprise a fourth monomer. In another embodiment, the second fluoropolymer may consist of a third and a fourth fluoropolymer. The fourth monomer may be selected from a group consisting of ethylene, propylene, 1,1,2,2-tetrafluoroethylene, 1-fluoroethylene, 1,1-difluoroethylene, 1,2-difluoroethylene, 1,1,2-trifluoroethylene, hexafluoropropylene, perfluoropropyl vinyl ether, perfluoroethyl vinyl ether, perfluoromethyl vinyl ether, perfluorobutyl ether, 1-chloro-1,2,2-trifluoroethylene, 1,1 dichloro 2,2, difluoroethylene, 1,2 dichloro 1,2, difluoroethylene, 1,1,2-trichloro-2-fluoroethylene and hexafluoropropylene. In a preferred embodiment, the second fluoropolymer consists of two alternating monomers of ethylene and 1,1,2,2-tetrafluoroethylene or most preferably, the second fluoropolymer consists of one monomer of 1,1,2,2-tetrafluoroethylene, i.e. PTFE.

The cable may further comprises a barrier layer comprising a third fluoropolymer, wherein the barrier layer extends along the longitudinal axis of the cable and is axially external to the first and second insulator layer. The barrier layer provides a number of roles, including providing further insulation of the internal components of the cable from the external environment or any current in the armour, but also provides an impermeable layer to prevent ingress of any gas and liquid into the interior of the cable, and to protect the internal conductors and insulator layers from corrosive substances found in the wellbore, such as hydrogen sulphide.

The barrier layer of the cable comprises a third fluoropolymer. In another embodiment, the barrier layer of the cable consists of a third fluoropolymer. The third fluoropolymer may comprise, or consist of, a fifth monomer. The fifth monomer may be selected from a group consisting of 1,1,2,2-tetrafluoroethylene, 1-fluoroethylene, 1,1-difluoroethylene, 1,2-difluoroethylene, 1,1,2-trifluoroethylene, hexafluoropropene, perfluoropropyl vinyl ether, perfluoroethyl vinyl ether, perfluoromethyl vinyl ether, perfluorobutyl ether, 1-chloro-1,2,2-trifluoroethylene, 1,1 dichloro 2,2, difluoroethylene, 1,2 dichloro 1,2, difluoroethylene, 1,1,2-trichloro-2-fluoroethylene, and hexafluoropropylene.

The third fluoropolymer may further comprise a sixth monomer. In another embodiment, the third fluoropolymer may consist of a fifth and a sixth monomer. The sixth monomer may be selected from a group consisting of ethylene, propylene, 1,1,2,2-tetrafluoroethylene, 1-fluoroethylene, 1,1-difluoroethylene, 1,2-difluoroethylene, 1,1,2-trifluoroethylene, hexafluoropropylene, perfluoropropyl vinyl ether, perfluoroethyl vinyl ether, perfluoromethyl vinyl ether, perfluorobutyl ether, 1-chloro-1,2,2-trifluoroethylene, 1,1 dichloro 2,2, difluoroethylene, 1,2 dichloro 1,2, difluoroethylene, 1,1,2-trichloro-2-fluoroethylene and hexafluoropropylene. In a preferred embodiment, the third fluoropolymer consists of one monomer of 1,1,2,2-tetrafluoroethylene, i.e. PTFE, or most preferably, the third fluoropolymer consists of two alternating monomers of ethylene and 1,1,2,2-tetrafluoroethylene, i.e. ETFE

In an embodiment, the cable further comprised a jacket layer comprising a fourth fluoropolymer, wherein the jacket layer extends along the longitudinal axis of the cable and is axially external to the second insulator layer, or external to the barrier layer, if present. The jacket layer serves as a further protective layer for the internal components of the cable. The primary role of the jacket layer is to provide mechanical protection of the internal conductors, insulator layers and barrier layer from the environment and the armour wires. In particular, when the cable comprises an external layer of armour wires (see below), such armour wires can deform under load, and return to their original geometry during unloading. This deformation of the armour wires subjects the internal components of the cable to considerable mechanical stress. The jacket provides protection of the internal components from such mechanical stresses.

The jacket layer of the cable comprises a fourth fluoropolymer. In another embodiment, the jacket layer of the cable consists of a fourth fluoropolymer. The fourth fluoropolymer may comprise, or consist of, a seventh monomer. The seventh monomer may be selected from a group consisting of 1,1,2,2-tetrafluoroethylene, 1-fluoroethylene, 1,1-difluoroethylene, 1,2-difluoroethylene, 1,1,2-trifluoroethylene, hexafluoropropene, perfluoropropyl vinyl ether, perfluoroethyl vinyl ether, perfluoromethyl vinyl ether, perfluorobutyl ether, 1-chloro-1,2,2-trifluoroethylene, 1,1 dichloro 2,2, difluoroethylene, 1,2 dichloro 1,2, difluoroethylene, 1,1,2-trichloro-2-fluoroethylene, and hexafluoropropylene.

The fourth fluoropolymer may further comprise an eighth monomer. In another embodiment, the fourth fluoropolymer may consist of a seventh and a eighth fluoropolymer. The fourth monomer may be selected from a group consisting of ethylene, propylene, 1,1,2,2-tetrafluoroethylene, 1-fluoroethylene, 1,1-difluoroethylene, 1,2-difluoroethylene, 1,1,2-trifluoroethylene, hexafluoropropylene, perfluoropropyl vinyl ether, perfluoroethyl vinyl ether, perfluoromethyl vinyl ether, perfluorobutyl ether, 1-chloro-1,2,2-trifluoroethylene, 1,1 dichloro 2,2, difluoroethylene, 1,2 dichloro 1,2, difluoroethylene, 1,1,2-trichloro-2-fluoroethylene and hexafluoropropylene. In a preferred embodiment, the fourth fluoropolymer consists of two alternating monomers of ethylene and 1,1,2,2-tetrafluoroethylene or most preferably, the fourth fluoropolymer consists of one monomer of 1,1,2,2-tetrafluoroethylene, i.e. PTFE.

As described previously, the first, second, third and fourth fluoropolymers may consist of, or comprise, one or two monomers. However the first, second, third and fourth fluoropolymers may alternatively further comprise three, four of more monomers. These further monomers may be selected from the list of monomers described above.

As noted above, in a preferred embodiment, the first insulation layer, second insulation layer, barrier layer and jacket layer each comprise of or consist of PTFE, PTFE, ETFE and PTFE, respectively. However, it will be appreciated that other combinations of fluoropolymers are envisaged. For instance, all four fluoropolymers may be the same, e.g. all consisting of, or comprising, ETFE or PTFE. Alternatively, all fluoropolymers may be different.

The first insulator layer, second insulator layer, barrier and jacket layer may each be formed by extrusion, thereby providing a contiguous and seam-free layer. Alternatively, they made by formed by wrapping or winding tape around the cable. If tapes of material are used, then it is important that tapes are wrapped/wound in a manner to create a continuous layer. Since extrusion is more likely to provide contiguous/seam-free layers, extrusion is referred.

The cable further comprises a first plurality of wires, wherein the first plurality of wires extends along the longitudinal axis of the cable and is axially external to the first insulator layer. If the cable further comprises any one or more of a second conductor, second insulator, barrier layer and/or jacket layer, then the first plurality of wires may be disposed axially externally to these features. These armour wires fulfil a number of roles. They provide tensile strength to the cable, such that it can both support its own weight, and that of any devices suspended using the cable during operation in a wellbore. This means that the cable of present invention can support other commonly used downhole devices, such as pumps, sensors and motors, in addition to its own self-weight. This is particularly useful when the cable of the present invention is used for powering an ESP, since not only can it support its own weight, it can support other equipment typically used during the operation of an ESP, such as the pump, motor and inverter. This is in contrast with presently available ESP cables, which lack tensile capacity and thus do not bear any weight themselves. This means presently available ESP cables are typically strapped to other cables/wires which are run into the hole in parallel with the ESP cables to specifically provide the load-bearing function. The armour wires also provide the cable with integrity, in particular, by preventing the cable from flattening (and thus squashing the internal components), as well as preventing twisting, stretching and over-flexion of the cable. The cable may further comprise a second plurality of wires, wherein the second plurality of wires also extends along the longitudinal axis of the cable and is

As noted above, in a preferred embodiment, the first insulation layer, second insulation layer, barrier layer and jacket layer each comprise of or consist of PTFE, PTFE, ETFE and PTFE, respectively. However, it will be appreciated that other combinations of fluoropolymers are envisaged. For instance, all four fluoropolymers may be the same, e.g. all consisting of, or comprising, ETFE or PTFE. Alternatively, all fluoropolymers may be different.

The first insulator layer, second insulator layer, barrier and jacket layer may each be formed by extrusion, thereby providing a contiguous and seam-free layer. Alternatively, they made by formed by wrapping or winding tape around the cable. If tapes of material are used, then it is important that tapes are wrapped/wound in a manner to create a continuous layer. Since extrusion is more likely to provide contiguous/seam-free layers, extrusion is referred.

The cable further comprises a first plurality of wires, wherein the first plurality of wires extends along the longitudinal axis of the cable and is axially external to the first insulator layer. If the cable further comprises any one or more of a second conductor, second insulator, barrier layer and/or jacket layer, then the first plurality of wires may be disposed axially externally to these features. These armour wires fulfil a number of roles. They provide tensile strength to the cable, such that it can both support its own weight, and that of any devices suspended using the cable during operation in a wellbore. This means that the cable of present invention can support other commonly used downhole devices, such as pumps, sensors and motors, in addition to its own self-weight. This is particularly useful when the cable of the present invention is used for powering an ESP, since not only can it support its own weight, it can support other equipment typically used during the operation of an ESP, such as the pump, motor and inverter. This is in contrast with presently available ESP cables, which lack tensile capacity and thus do not bear any weight themselves. This means presently available ESP cables are typically strapped to other cables/wires which are run into the hole in parallel with the ESP cables to specifically provide the load-bearing function. The armour wires also provide the cable with integrity, in particular, by preventing the cable from flattening (and thus squashing the internal components), as well as preventing twisting, stretching and over-flexion of the cable. The cable may further comprise a second plurality of wires, wherein the second plurality of wires also extends along the longitudinal axis of the cable and is

The nickel based alloy may comprise, or consists of 58 % (w/w) nickel, 20-23 % (w/w) chromium, 5 % (w/w) iron, 8-10 % (w/w) molybdenum, 3.15-4.15 % (w/w) niobium, 1 % (w/w) cobalt, 0.5 % (w/w) manganese, 0.4 % (w/w) aluminium, 0.4 % (w/w) titanium, with remainder impurities or additives (this alloy is available commercially under the name Inconel 625 ^{tm}). This is the most preferred nickel-based alloy for use with the invention.

The nickel based alloy may comprise, or consists of 50-55 % (w/w) nickel, 17-21 % (w/w) chromium, 2.8-3.3 % (w/w) molybdenum, 4.75-5.5 % (w/w) niobium, 1% cobalt, 0.35 % (w/w) manganese, 0.2-0.8 % (w/w) aluminium, 0.65-1.15 % (w/w) titanium, 0.3 % (w/w) copper with remainder impurities or additives (this alloy is available commercially under the name Inconel 718 ^{tm}).

The nickel based alloy may comprise, or consists of 70 % (w/w) nickel, 14-17 % (w/w) chromium, 5-9 % (w/w) iron, 0.7-1.2 % (w/w) niobium, 1 % (w/w) cobalt, 1 % (w/w) manganese, 0.5 % (w/w) copper, 0.4-1 % (w/w) aluminium, 2.25-2.75 % (w/w) titanium with remainder impurities or additives (this alloy is available commercially under the name Inconel X-750 ^{tm}).

The diameter of the cable, and the thickness of the various layers, may be varied. In a preferred embodiment, the cross-sectional area of the first conductor is in the range of from 15 to 25 mm², more preferably from 18 to 22 mm², most preferably 21.1 mm². The first insulator layer may have a thickness of from 1.8 to 3.0 mm, preferably from 2.1 mm to 2.7 mm, most preferably 2.4 mm. The second conductor may have a cross-sectional area in the range of from 20 mm² to 32 mm², more preferably from 23 mm² to 29 mm², most preferably 25.8 mm². The second insulator may have a thickness in the range of from 0.6 to 1.3 mm, more preferably 0.8 to 1.1 mm, most preferably 0.95 mm. The barrier layer may have a thickness in the range of from 0.3 to 0.7 mm, more preferably 0.4 to 0.6 mm, most preferably 0.5 mm. The jacket layer may have a thickness in the range of from 0.7 to 1.3 mm, more preferably 0.8 to 1.2 mm, most preferably 1.0 mm. The layer formed of the first plurality of wires may have a thickness in the range of from 0.8 to 1.6 mm, preferably in the range of 1.0 to 1.4 mm, most preferably 1.2 mm. The layer formed of the second plurality of wires may have a thickness in the range of from 0.8 to 1.6 mm, preferably in the range of 1.0 to 1.4 mm, most preferably 1.1 mm.

The nickel based alloy may comprise, or consists of 58 % (w/w) nickel, 20-23 % (w/w) chromium, 5 % (w/w) iron, 8-10 % (w/w) molybdenum, 3.15-4.15 % (w/w) niobium, 1 % (w/w) cobalt, 0.5 % (w/w) manganese, 0.4 % (w/w) aluminium, 0.4 % (w/w) titanium, with remainder impurities or additives (this alloy is available commercially under the name Inconel 625 ^{tm}). This is the most preferred nickel-based alloy for use with the invention.

The nickel based alloy may comprise, or consists of 50-55 % (w/w) nickel, 17-21 % (w/w) chromium, 2.8-3.3 % (w/w) molybdenum, 4.75-5.5 % (w/w) niobium, 1% cobalt, 0.35 % (w/w) manganese, 0.2-0.8 % (w/w) aluminium, 0.65-1.15 % (w/w) titanium, 0.3 % (w/w) copper with remainder impurities or additives (this alloy is available commercially under the name Inconel 718 ^{tm}).

The nickel based alloy may comprise, or consists of 70 % (w/w) nickel, 14-17 % (w/w) chromium, 5-9 % (w/w) iron, 0.7-1.2 % (w/w) niobium, 1 % (w/w) cobalt, 1 % (w/w) manganese, 0.5 % (w/w) copper, 0.4-1 % (w/w) aluminium, 2.25-2.75 % (w/w) titanium with remainder impurities or additives (this alloy is available commercially under the name Inconel X-750 ^{tm}).

The diameter of the cable, and the thickness of the various layers, may be varied. In a preferred embodiment, the cross-sectional area of the first conductor is in the range of from 15 to 25 mm², more preferably from 18 to 22 mm², most preferably 21.1 mm². The first insulator layer may have a thickness of from 1.8 to 3.0 mm, preferably from 2.1 mm to 2.7 mm, most preferably 2.4 mm. The second conductor may have a cross-sectional area in the range of from 20 mm² to 32 mm², more preferably from 23 mm² to 29 mm², most preferably 25.8 mm². The second insulator may have a thickness in the range of from 0.6 to 1.3 mm, more preferably 0.8 to 1.1 mm, most preferably 0.95 mm. The barrier layer may have a thickness in the range of from 0.3 to 0.7 mm, more preferably 0.4 to 0.6 mm, most preferably 0.5 mm. The jacket layer may have a thickness in the range of from 0.7 to 1.3 mm, more preferably 0.8 to 1.2 mm, most preferably 1.0 mm. The layer formed of the first plurality of wires may have a thickness in the range of from 0.8 to 1.6 mm, preferably in the range of 1.0 to 1.4 mm, most preferably 1.2 mm. The layer formed of the second plurality of wires may have a thickness in the range of from 0.8 to 1.6 mm, preferably in the range of 1.0 to 1.4 mm, most preferably 1.1 mm.
which barrier layer may be disposed around the barrier layer around the first and second insulating layers. A jacket layer may also be provided, which may be disposed around the barrier layer.

The method may further comprise the steps of providing a first plurality of wires, and disposing the first plurality of wires along the longitudinal axis of the cable and axially external to the jacket layer. The external surface of the jacket layer is preferably surrounded by the first plurality of wires. A second plurality of wires may be provided, which may then be disposed extending along the longitudinal axis of the cable and axially external to the first plurality of wires. The first plurality of wires may be helically wound in a first direction, and the wires of the second plurality of wires may be helically wound in a direction opposition to the first.

In another aspect the present invention provides a method of transmitting electricity, comprising providing a first installation or device and a second installation or device connected by a cable according to the present invention, and transmitting electricity from the first installation or device to the second installation or device through the cable, wherein the first installation or device is in a wellbore.

The first installation or device may be a sensor or an electrical submersible pump, or any other device typically used downhole for oil exploration or production that also requires electricity. The second installation or device may be a reel or spool, which may be installed at the surface.

The first device may be lowered into the wellbore by lowering a tension applied to the cable, i.e. by relaxing tension on the cable, the device or installation may lower into the wellbore under the influence of gravity. After the first device or installation has fulfilled its role or function downhole, it may be raised from the wellbore by increasing a tension to the cable. In other words, by pulling on the cable from the surface, the device or installation and the cable may be pulled out of the hole. The reel or spool installed on the surface may be used to lift or lower the device/ installation from the surface, as well as storing any excess cable. Alternatively, a separate device, such as a hoist or winch may be used to lift/lower the first installation or device, and in this case, the reel or spool may be used to only store the excess cable.

### Brief Description of the Drawing

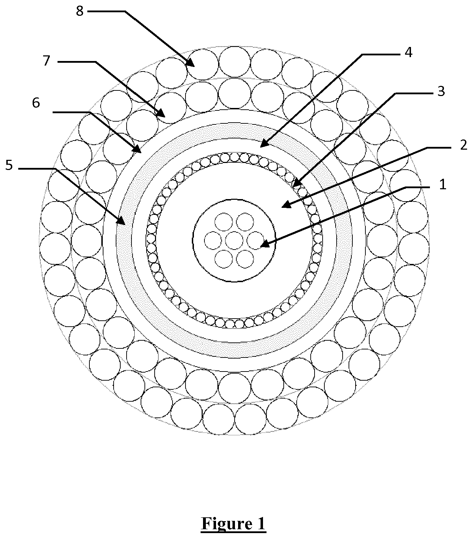

The accompanying Figure 1 helps illustrate the example and the present invention, but is not to be construed as limiting the invention. Figure 1 shows a cross section of an embodiment of the cable of the present invention, and is not to scale. The first conductor 1 forms the central core of the cable. The cable may be formed of a plurality of wires (7 are schematically shown, although more may be used). The first conductor is surrounded by a first insulator layer 2. The first insulator layer is surrounded by a second conductor 3. The second conductor may be formed of a plurality of wires disposed around the first insulator layer to form, in effect, a layer of conductor. The second conductor is surrounded by a second insulator layer 4. The second insulator layer is surrounded by a barrier layer 5, which is surrounded by a jacket layer 6. Armour wires are provided on the outside of the cable - a first plurality 7 is disposed in a layer, which is surrounded by a second plurality of wires 8.

The invention may be better understood with reference to the following example.

### Example

A cable was formed with the following characteristics:
- First conductor: compact 37 wire, copper (21.1 mm²)
- First insulator layer: PTFE (2.4 mm)
- Second conductor: copper (25.8 mm²)
- Second insulator layer: PTFE (0.95 mm)
- Barrier layer: ETFE (0.5 mm)
- Jacket layer: PTFE (1.0 mm)
- Layer of first plurality of armour wire: stainless steel (1.2 mm)
- Layer of second plurality of armour wire: stainless steel (1.1 mm)

This provides a cable having the following properties:
- Outer diameter of 21.1 mm
- Voltage rating (conductor-return) 5kV DC
- Voltage rating (return- armour) 2.5kV DC
- DC resistance - first conductor 0.9 ohms/km
- DC resistance - second conductor 0.7 ohms/km
- Current rating 120 A
- Weight: 1.41 kg/m
- Working load 44.5 kN
- Minimum breaking tension 133.6 kN
- Minimum bending radii (zero tension) 0.36 m; (33.7kN operating tension) 0.43 m

## Claims

1. A cable comprising a first conductor, a first insulator layer and a first plurality of wires,
wherein the first conductor, the first insulator and the first plurality of wires extend along an longitudinal axis of the cable,
wherein the first insulator layer is axially external to the conductor, and the first plurality of wires is axially external to the first insulator, and
wherein the first insulator layer comprises a first fluoropolymer,
wherein the first plurality of wires consists of an alloy comprising nickel, chromium and optionally up to 20% (w/w) additives or impurities.

2. A cable according to claim 1, wherein the first fluoropolymer consists of a first monomer, or is a copolymer comprising a first monomer and a second monomer, wherein
the first monomer is selected from a group consisting of 1,1,2,2-tetrafluoroethylene, 1-fluoroethylene, 1,1-difluoroethylene, 1,2-difluoroethylene, 1,1,2-trifluoroethylene, hexafluoropropene, perfluoropropyl vinyl ether, perfluoroethyl vinyl ether, perfluoromethyl vinyl ether, perfluorobutyl ether, 1-chloro-1,2,2-trifluoroethylene, 1,1-dichloro 2,2-difluoroethylene, 1,2-dichloro 1,2-difluoroethylene, 1,1,2-trichloro-2-fluoroethylene, and hexafluoropropylene, and
the second monomer is selected from a group consisting of ethylene, propylene, 1,1,2,2-tetrafluoroethylene, 1-fluoroethylene, 1,1-difluoroethylene, 1,2-difluoroethylene, 1,1,2-trifluoroethylene, hexafluoropropylene, perfluoropropyl vinyl ether, perfluoroethyl vinyl ether, perfluoromethyl vinyl ether, perfluorobutyl ether, 1-chloro-1,2,2-trifluoroethylene, 1,1-dichloro-2,2-difluoroethylene, 1,2-dichloro-1,2-difluoroethylene, 1,1,2-trichloro-2-fluoroethylene and hexafluoropropylene,
preferably wherein the first fluoropolymer is polytetrafluoroethylene or poly(ethylene-co-tetrafluoroethylene).

3. A cable according to claim 1 or 2, further comprising a second conductor, wherein the second conductor extends along the longitudinal axis of the cable and is axially external to the first insulator.

4. A cable according to any preceding claim, further comprising a second insulator layer comprising a second fluoropolymer, wherein the second insulator layer extends along the longitudinal axis of the cable and is axially external to the second conductor.

5. A cable according to claim 4, wherein the second fluoropolymer consists of a third monomer, or is a copolymer comprising a third monomer and a fourth monomer, wherein
the third monomer is selected from a group consisting of 1,1,2,2-tetrafluoroethylene, 1-fluoroethylene, 1,1-difluoroethylene, 1,2-difluoroethylene, 1,1,2-trifluoroethylene, hexafluoropropene, perfluoropropyl vinyl ether, perfluoroethyl vinyl ether, perfluoromethyl vinyl ether, perfluorobutyl ether, 1-chloro-1,2,2-trifluoroethylene, 1,1-dichloro 2,2-difluoroethylene, 1,2-dichloro 1,2-difluoroethylene, 1,1,2-trichloro-2-fluoroethylene, and hexafluoropropylene, and
the fourth monomer is selected from a group consisting of ethylene, propylene, 1,1,2,2-tetrafluoroethylene, 1-fluoroethylene, 1,1-difluoroethylene, 1,2-difluoroethylene, 1,1,2-trifluoroethylene, hexafluoropropylene, perfluoropropyl vinyl ether, perfluoroethyl vinyl ether, perfluoromethyl vinyl ether, perfluorobutyl ether, 1-chloro-1,2,2-trifluoroethylene, 1,1-dichlor-2,2-difluoroethylene, 1,2-dichloro-1,2-difluoroethylene, 1,1,2-trichloro-2-fluoroethylene and hexafluoropropylene,
preferably wherein the second fluoropolymer is polytetrafluoroethylene or poly(ethylene-co-tetrafluoroethylene).

6. A cable according to claim 4 or 5, further comprising a barrier layer comprising a third fluoropolymer, wherein the barrier layer extends along the longitudinal axis of the cable and is axially external to the first and second insulator layer,
preferably wherein the third fluoropolymer consists of a fifth monomer, or is a copolymer comprising a fifth monomer and a sixth monomer, wherein
the fifth monomer is selected from a group consisting of 1,1,2,2-tetrafluoroethylene, 1-fluoroethylene, 1,1-difluoroethylene, 1,2-difluoroethylene, 1,1,2-trifluoroethylene, hexafluoropropene, perfluoropropyl vinyl ether, perfluoroethyl vinyl ether, perfluoromethyl vinyl ether, perfluorobutyl ether, 1-chloro-1,2,2-trifluoroethylene, 1,1-dichloro 2,2-difluoroethylene, 1,2-dichloro 1,2-difluoroethylene, 1,1,2-trichloro-2-fluoroethylene, and hexafluoropropylene, and
the sixth monomer is selected from a group consisting of ethylene, propylene, 1,1,2,2-tetrafluoroethylene, 1-fluoroethylene, 1,1-difluoroethylene, 1,2-difluoroethylene, 1,1,2-trifluoroethylene, hexafluoropropylene, perfluoropropyl vinyl ether, perfluoroethyl vinyl ether, perfluoromethyl vinyl ether, perfluorobutyl ether, 1-chloro-1,2,2-trifluoroethylene, 1,1-dichloro-2,2-difluoroethylene, 1,2-dichloro-1,2-difluoroethylene, 1,1,2-trichloro-2-fluoroethylene and hexafluoropropylene,
more preferably wherein the third fluoropolymer is polytetrafluoroethylene or poly(ethylene-co-tetrafluoroethylene).

7. A cable according to any of claims 4 to 6, further comprising a jacket layer comprising a fourth fluoropolymer, wherein the jacket layer extends along the longitudinal axis of the cable and is axially external to the second insulator layer, or external to the barrier layer, if present,
preferably wherein the fourth fluoropolymer consists of a seventh monomer, or is a copolymer comprising a seventh monomer and an eighth monomer, wherein:
the seventh monomer is selected from a group consisting of 1,1,2,2-tetrafluoroethylene, 1-fluoroethylene, 1,1-difluoroethylene, 1,2-difluoroethylene, 1,1,2-trifluoroethylene, hexafluoropropene, perfluoropropyl vinyl ether, perfluoroethyl vinyl ether, perfluoromethyl vinyl ether, perfluorobutyl ether, 1-chloro-1,2,2-trifluoroethylene, 1,1-dichloro-2,2-difluoroethylene, 1,2-dichloro-1,2-difluoroethylene, 1,1,2-trichloro-2-fluoroethylene, and hexafluoropropylene, and
the eight monomer is selected from a group consisting of ethylene, propylene, 1,1,2,2-tetrafluoroethylene, 1-fluoroethylene, 1,1-difluoroethylene, 1,2-difluoroethylene, 1,1,2-trifluoroethylene, hexafluoropropylene, perfluoropropyl vinyl ether, perfluoroethyl vinyl ether, perfluoromethyl vinyl ether, perfluorobutyl ether, 1-chloro-1,2,2-trifluoroethylene, 1,1-dichloro-2,2-difluoroethylene, 1,2-dichloro-1,2-difluoroethylene, 1,1,2-trichloro-2-fluoroethylene and hexafluoropropylene,
more preferably wherein the fourth fluoropolymer is polytetrafluoroethylene or poly(ethylene-co-tetrafluoroethylene).

8. A cable according to any preceding claim, further comprising a second plurality of wires, wherein the second plurality of wires extends along the longitudinal axis of the cable and is axially external to the first plurality of wires.

9. A cable according to claim 8 wherein the wires of the first plurality of wires are helically wound in a first direction, and the wires of the second plurality of wires are helically wound in a direction opposite to the first direction.

10. A cable according to any preceding claim, wherein the second plurality of wires comprises an alloy comprising nickel.

11. A cable according to any preceding claim, wherein the first plurality of wires and/or the second plurality of wires consists of an alloy consisting of:
- nickel, chromium and optionally up to 20% (w/w) additives or impurities;
- 40 to 74% (w/w) nickel, 14 to 25% (w/w) chromium, and optionally up to 20 % (w/w) additives or impurities;
- 58 % (w/w) nickel, 20-23 % (w/w) chromium, 5 % (w/w) iron, 8-10 % (w/w) molybdenum, 3.15-4.15 % (w/w) niobium, 1 % (w/w) cobalt, 0.5 % (w/w) manganese, 0.4 % (w/w) aluminium, 0.4 % (w/w) titanium, with remainder impurities or additives;
- 72% (w/w) nickel, 14-17% (w/w) chromium, 6-10 % (w/w) iron, 1 % (w/w) manganese, 0.5 % (w/w) copper, with remainder impurities or additives;
- 44.2 %-56 % (w/w) nickel, 20-24 % (w/w) chromium, 3 % (w/w) iron, 8-10 % (w/w) molybdenum, 10-15 % (w/w) cobalt, 0.5 % (w/w) manganese, 0.5 % (w/w) copper, 0.8-1.5 % (w/w) aluminium, 0.6 % (w/w) titanium with remainder impurities or additives;
- 50-55 % (w/w) nickel, 17-21 % (w/w) chromium, 2.8-3.3 % (w/w) molybdenum, 4.75-5.5 % (w/w) niobium, 1% (w/w) cobalt, 0.35 % (w/w) manganese, 0.2-0.8 % (w/w) aluminium, 0.65-1.15 % (w/w) titanium, 0.3 % (w/w) copper with remainder impurities or additives; or
- 70 % (w/w) nickel, 14-17 % (w/w) chromium, 5-9 % (w/w) iron, 0.7-1.2 % (w/w) niobium, 1 % (w/w) cobalt, 1 % (w/w) manganese, 0.5 % (w/w) copper, 0.4-1 % (w/w) aluminium, 2.25-2.75 % (w/w) titanium with remainder impurities or additives,
optionally wherein the additives or impurities are selected from iron, molybdenum, niobium, cobalt, manganese, copper, aluminium, titanium, silicon, carbon, sulphur, phosphorus or boron, or any combination thereof.

12. A method of manufacturing a cable according to any one of claims 1 to 11, comprising:
disposing the first insulator layer around the first conductor and along a longitudinal axis thereof, and
disposing the first plurality of wires around the first insulator layer and along a longitudinal axis thereof,
wherein the first insulator layer comprises the first fluoropolymer.

13. A method of transmitting electricity, comprising providing a first installation or device and a second installation or device connected by a cable according to any one of claims 1 to 11, and transmitting electricity from the first installation or device to the second installation or device through the cable, wherein the first installation or device is in a wellbore, and
optionally further comprising lowering the first device or installation into the wellbore by lowering a tension applied to the cable, and/or raising the first device or installation from the wellbore by increasing the tension to the cable.

14. A method of suspending a first device or installation in a wellbore, comprising providing a cable according to any one of claims 1 to 11, securing a first end of the cable to the first device or installation, securing a second end of the cable to a second device or installation, and suspending the first device or installation in the wellbore, and
optionally further comprising transmitting electricity from the first installation or device to the second installation or device through the cable.

## Patentansprüche

1. Kabel, umfassend einen ersten Leiter, eine erste Isolatorschicht und eine erste Vielzahl von Drähten,
wobei sich der erste Leiter, der erste Isolator und die erste Vielzahl von Drähten entlang einer Längsachse des Kabels erstrecken,
wobei die erste Isolatorschicht axial außerhalb des Leiters liegt und die erste Vielzahl von Drähten axial außerhalb des ersten Isolators liegt, und
wobei die erste Isolatorschicht ein erstes Fluorpolymer umfasst,
wobei die erste Vielzahl von Drähten aus einer Nickel, Chrom und optional bis zu 20 Gew.-% Additive oder Verunreinigungen umfassenden Legierung besteht.

2. Kabel nach Anspruch 1, wobei das erste Fluorpolymer aus einem ersten Monomer besteht oder es sich dabei um ein ein erstes Monomer und ein zweites Monomer umfassendes Copolymer handelt, wobei
das erste Monomer aus einer Gruppe ausgewählt wird, die aus 1,1,2,2-Tetrafluorethylen, 1-Fluorethylen, 1,1-Difluorethylen, 1,2-Difluorethylen, 1,1,2-Trifluorethylen, Hexafluorpropen, Perfluorpropylvinylether, Perfluorethylvinylether, Perfluormethylvinylether, Perfluorbutylether, 1-Chlor-1,2,2-trifluorethylen, 1,1-Dichlor-2,2-difluorethylen, 1,2-Dichlor-1,2-difluorethylen, 1,1,2-Trichlor-2-Fluorethylen und Hexafluorpropylen besteht, und
das zweite Monomer aus einer Gruppe ausgewählt wird, die aus Ethylen, Propylen, 1,1,2,2-Tetrafluorethylen, 1-Fluorethylen, 1,1-Difluorethylen, 1,2-Difluorethylen, 1,1,2-Trifluorethylen, Hexafluorpropylen, Perfluorpropylvinylether, Perfluorethylvinylether, Perfluormethylvinylether, Perfluorbutylether, 1-Chlor-1,2,2-trifluorethylen, 1,1-Dichlor-2,2-difluorethylen, 1,2-Dichlor-1,2-difluorethylen, 1,1,2-Trichlor-2-fluorethylen und Hexafluorpropylen besteht,
wobei es sich vorzugsweise bei dem ersten Fluorpolymer um Polytetrafluorethylen oder Poly(ethylen-co-tetrafluorethylen) handelt.

3. Kabel nach Anspruch 1 oder 2, weiter umfassend einen zweiten Leiter, wobei sich der zweite Leiter entlang der Längsachse des Kabels erstreckt und axial außerhalb des ersten Isolators liegt.

4. Kabel einem der vorangehenden Ansprüche, weiter umfassend eine zweite Isolatorschicht, die ein zweites Fluorpolymer umfasst, wobei sich die zweite Isolatorschicht entlang der Längsachse des Kabels erstreckt und axial außerhalb des zweiten Leiters liegt.

5. Kabel nach Anspruch 4, wobei das zweite Fluorpolymer aus einem dritten Monomer besteht oder es sich dabei um ein ein drittes Monomer und ein viertes Monomer umfassendes Copolymer handelt, wobei
das dritte Monomer aus einer Gruppe ausgewählt wird, die aus 1,1,2,2-Tetrafluorethylen, 1-Fluorethylen, 1,1-Difluorethylen, 1,2-Difluorethylen, 1,1,2-Trifluorethylen, Hexafluorpropen, Perfluorpropylvinylether, Perfluorethylvinylether, Perfluormethylvinylether, Perfluorbutylether, 1-Chlor-1,2,2-trifluorethylen, 1,1-Dichlor-2,2-difluorethylen, 1,2-Dichlor-1,2-difluorethylen, 1,1,2-Trichlor-2-Fluorethylen und Hexafluorpropylen besteht, und
das vierte Monomer aus einer Gruppe ausgewählt wird, die aus Ethylen, Propylen, 1,1,2,2-Tetrafluorethylen, 1-Fluorethylen, 1,1-Difluorethylen, 1,2-Difluorethylen, 1,1,2-Trifluorethylen, Hexafluorpropylen, Perfluorpropylvinylether, Perfluorethylvinylether, Perfluormethylvinylether, Perfluorbutylether, 1-Chlor-1,2,2-trifluorethylen, 1,1-Dichlor-2,2-difluorethylen, 1,2-Dichlor-1,2-difluorethylen, 1,1,2-Trichlor-2-fluorethylen und Hexafluorpropylen besteht,
wobei es sich vorzugsweise bei dem zweiten Fluorpolymer um Polytetrafluorethylen oder Poly(ethylen-co-tetrafluorethylen) handelt.

6. Kabel nach Anspruch 4 oder 5, weiter umfassend eine Sperrschicht, die ein drittes Fluorpolymer umfasst, wobei sich die Sperrschicht entlang der Längsachse des Kabels erstreckt und axial außerhalb der ersten und der zweiten Isolatorschicht liegt,
wobei das dritte Fluorpolymer vorzugsweise aus einem fünften Monomer besteht oder es sich dabei um ein ein fünftes Monomer und ein sechstes Monomer umfassendes Copolymer handelt, wobei
das fünfte Monomer aus einer Gruppe ausgewählt wird, die aus 1,1,2,2-Tetrafluorethylen, 1-Fluorethylen, 1,1-Difluorethylen, 1,2-Difluorethylen, 1,1,2-Trifluorethylen, Hexafluorpropen, Perfluorpropylvinylether, Perfluorethylvinylether, Perfluormethylvinylether, Perfluorbutylether, 1-Chlor-1,2,2-trifluorethylen, 1,1-Dichlor-2,2-difluorethylen, 1,2-Dichlor-1,2-difluorethylen, 1,1,2-Trichlor-2-Fluorethylen und Hexafluorpropylen besteht, und
das sechste Monomer aus einer Gruppe ausgewählt wird, die aus Ethylen, Propylen, 1,1,2,2-Tetrafluorethylen, 1-Fluorethylen, 1,1-Difluorethylen, 1,2-Difluorethylen, 1,1,2-Trifluorethylen, Hexafluorpropylen, Perfluorpropylvinylether, Perfluorethylvinylether, Perfluormethylvinylether, Perfluorbutylether, 1-Chlor-1,2,2-trifluorethylen, 1,1-Dichlor-2,2-difluorethylen, 1,2-Dichlor-1,2-difluorethylen, 1,1,2-Trichlor-2-fluorethylen und Hexafluorpropylen besteht,
wobei es sich bei dem dritten Fluorpolymer besser um Polytetrafluorethylen oder Poly(ethylen-co-tetrafluorethylen) handelt.

7. Kabel nach einem der Ansprüche 4 bis 6, weiter umfassend eine Mantelschicht, die ein viertes Fluorpolymer umfasst, wobei sich die Mantelschicht entlang der Längsachse des Kabels erstreckt und axial außerhalb der zweiten Isolatorschicht liegt oder außerhalb der Sperrschicht, falls vorhanden, liegt,
wobei das vierte Fluorpolymer vorzugsweise aus einem siebten Monomer besteht oder es sich dabei um ein ein siebtes Monomer und ein achtes Monomer umfassendes Copolymer handelt, wobei:
das siebte Monomer aus einer Gruppe ausgewählt wird, die aus 1,1,2,2-Tetrafluorethylen, 1-Fluorethylen, 1,1-Difluorethylen, 1,2-Difluorethylen, 1,1,2-Trifluorethylen, Hexafluorpropen, Perfluorpropylvinylether, Perfluorethylvinylether, Perfluormethylvinylether, Perfluorbutylether, 1-Chlor-1,2,2-trifluorethylen, 1,1-Dichlor-2,2-difluorethylen, 1,2-Dichlor-1,2-difluorethylen, 1,1,2-Trichlor-2-Fluorethylen und Hexafluorpropylen besteht, und
das achte Monomer aus einer Gruppe ausgewählt wird, die aus Ethylen, Propylen, 1,1,2,2-Tetrafluorethylen, 1-Fluorethylen, 1,1-Difluorethylen, 1,2-Difluorethylen, 1,1,2-Trifluorethylen, Hexafluorpropylen, Perfluorpropylvinylether, Perfluorethylvinylether, Perfluormethylvinylether, Perfluorbutylether, 1-Chlor-1,2,2-trifluorethylen, 1,1-Dichlor-2,2-difluorethylen, 1,2-Dichlor-1,2-difluorethylen, 1,1,2-Trichlor-2-fluorethylen und Hexafluorpropylen besteht,
wobei es sich bei dem vierten Fluorpolymer besser um Polytetrafluorethylen oder Poly(ethylen-co-tetrafluorethylen) handelt.

8. Kabel nach einem der vorangehenden Ansprüche, weiter umfassend eine zweite Vielzahl von Drähten, wobei sich die zweite Vielzahl von Drähten entlang der Längsachse des Kabels erstreckt und axial außerhalb der ersten Vielzahl von Kabeln liegt.

9. Kabel nach Anspruch 10, wobei die Drähte der ersten Vielzahl von Drähten in einer ersten Richtung spiralförmig gewickelt sind und die Drähte der zweiten Vielzahl von Drähten in einer der ersten Richtung entgegengesetzten Richtung spiralförmig gewickelt sind.

10. Kabel nach einem der vorangehenden Ansprüche, wobei die zweite Vielzahl von Drähten eine Nickel umfassende Legierung umfasst.

11. Kabel nach einem der vorangehenden Ansprüche, wobei die erste Vielzahl von Drähten und/oder die zweite Vielzahl von Drähten aus einer Legierung besteht, die aus Folgendem besteht:
- Nickel, Chrom und optional bis zu 20 Gew.-% Additive oder Verunreinigungen;
- 40 bis 74 Gew.-% Nickel, 14 bis 25 Gew.-% Chrom und optional bis zu 20 Gew.-% Additive oder Verunreinigungen;
- 58 Gew.-% Nickel, 20-23 Gew.-% Chrom, 5 Gew.-% Eisen, 8-10 Gew.-% Molybdän, 3,15-4,15 Gew.-% Niob, 1 Gew.-% Kobalt, 0,5 Gew.-% Mangan, 0,4 Gew.-% Aluminium, 0,4 Gew.-% Titan mit restlichen Verunreinigungen oder Additiven;
- 72 Gew.-% Nickel, 14-17 Gew.-% Chrom, 6-10 Gew.-% Eisen, 1 Gew.-% Mangan, 0,5 Gew.-% Kupfer mit restlichen Verunreinigungen oder Additiven;
- 44,2-56 Gew.-% Nickel, 20-24 Gew.-% Chrom, 3 Gew.-% Eisen, 8-10 Gew.-% Molybdän, 10-15 Gew.-% Kobalt, 0,5 Gew.-% Mangan, 0,5 Gew.-% Kupfer, 0,8-1,5 Gew.-% Aluminium, 0,6 Gew.-% Titan mit restlichen Verunreinigungen oder Additiven;
- 50-55 Gew.-% Nickel, 17-21 Gew.-% Chrom, 2,8-3,3 Gew.-% Molybdän, 4,75-5,5 Gew.-% Niob, 1 Gew.-% Kobalt, 0,35 Gew.-% Mangan, 0,2-0,8 Gew.-% Aluminium, 0,65-1,15 Gew.-% Titan, 0,3 Gew.-% Kupfer mit restlichen Verunreinigungen oder Additiven; oder
- 70 Gew.-% Nickel, 14-17 Gew.-% Chrom, 5-9 Gew.-% Eisen, 0,7-1,2 Gew.-% Niob, 1 Gew.-% Kobalt, 1 Gew.-% Mangan, 0,5 Gew.-% Kupfer, 0,4-1 Gew.-% Aluminium, 2,25-2,75 Gew.-% Titan mit restlichen Verunreinigungen oder Additiven,
wobei optional die Additive oder Verunreinigungen ausgewählt werden aus Eisen, Molybdän, Niob, Kobalt, Mangan, Kupfer, Aluminium, Titan, Silizium, Kohlenstoff, Schwefel, Phosphor oder Bor oder beliebigen Kombinationen davon.

12. Verfahren zum Herstellen eines Kabels nach einem der Ansprüche 1 bis 11, das Folgendes umfasst:
Anordnen der ersten Isolatorschicht um den ersten Leiter und entlang einer Längsachse desselben, und
Anordnen der ersten Vielzahl von Drähten um die erste Isolatorschicht und entlang einer Längsachse derselben,
wobei die erste Isolatorschicht das erste Fluorpolymer umfasst.

13. Verfahren zum Übertragen von elektrischem Strom, umfassend das Bereitstellen einer ersten Installation oder Vorrichtung und einer zweiten Installation oder Vorrichtung, die durch ein Kabel nach einem der Ansprüche 1 bis 11 verbunden sind, und Übertragen von elektrischem Strom von der ersten Installation oder Vorrichtung zu der zweiten Installation oder Vorrichtung durch das Kabel, wobei sich die erste Installation oder Vorrichtung in einem Brunnenbohrloch befindet, und
optional weiter umfassend das Absenken der ersten Vorrichtung oder Installation in das Brunnenbohrloch durch Senken eines auf das Kabel aufgebrachten Zugs und/oder Anheben der ersten Vorrichtung oder Installation aus dem Brunnenbohrloch durch Erhöhen des Zugs auf das Kabel.

14. Verfahren zum Aufhängen einer ersten Vorrichtung oder Installation in einem Brunnenbohrloch, umfassend das Bereitstellen eines Kabels nach einem der Ansprüche 1 bis 11, Befestigen eines ersten Endes des Kabels an der ersten Vorrichtung oder Installation, Befestigen eines zweiten Endes das Kabels an einer zweiten Vorrichtung oder Installation und Aufhängen der ersten Vorrichtung oder Installation in dem Brunnenbohrloch, und
optional weiter umfassend das Übertragen von elektrischem Strom von der ersten Installation oder Vorrichtung zu der zweiten Installation oder Vorrichtung durch das Kabel.

## Revendications

1. Câble comprenant un premier conducteur, une première couche d'isolant et une première pluralité de fils,
dans lequel le premier conducteur, le premier isolant et la première pluralité de fils s'étendent le long d'un axe longitudinal du câble,
dans lequel la première couche d'isolant est disposée à l'extérieur du conducteur dans le sens axial et la première pluralité de fils est disposée à l'extérieur du premier isolant dans le sens axial, et
dans lequel la première couche d'isolant comprend un premier fluoropolymère,
dans lequel la première pluralité de fils est constituée d'un alliage comprenant du nickel, du chrome et, facultativement, jusqu'à 20 % en poids d'additifs ou d'impuretés.

2. Câble selon la revendication 1, dans lequel le premier fluoropolymère est constitué d'un premier monomère ou est un copolymère comprenant un premier monomère et un deuxième monomère, dans lequel
le premier monomère est choisi dans un groupe constitué par le 1,1,2,2-tétrafluoroéthylène, le 1-fluoroéthylène, le 1,1-difluoroéthylène, le 1,2-difluoroéthylène, le 1,1,2-trifluoroéthylène, l'hexafluoropropène, l'éther vinylique de perfluoropropyle, l'éther vinylique de perfluoroéthyle, l'éther vinylique de perfluorométhyle, l'éther de perfluorobutyle, le 1-chloro-1,2,2-trifluoroéthylène, le 1,1-dichloro-2,2-difluoroéthylène, le 1,2-dichloro-1,2-difluoroéthylène, le 1,1,2-trichloro-2-fluoroéthylène et l'hexafluoropropylène, et
le deuxième monomère est choisi dans un groupe constitué par l'éthylène, le propylène, le 1,1,2,2-tétrafluoroéthylène, le 1-fluoroéthylène, le 1,1-difluoroéthylène, le 1,2-difluoroéthylène, le 1,1,2-trifluoroéthylène, l'hexafluoropropylène, l'éther vinylique de perfluoropropyle, l'éther vinylique de perfluoroéthyle, l'éther vinylique de perfluorométhyle, l'éther de perfluorobutyle, le 1-chloro-1,2,2-trifluoroéthylène, le 1,1-dichloro-2,2-difluoroéthylène, le 1,2-dichloro-1,2-difluoroéthylène, le 1,1,2-trichloro-2-fluoroéthylène et l'hexafluoropropylène,
de préférence dans lequel le premier fluoropolymère est le polytétrafluoroéthylène ou le poly(éthylène-co-tétrafluoroéthylène).

3. Câble selon la revendication 1 ou la revendication 2, comprenant en outre un deuxième conducteur, dans lequel le deuxième conducteur s'étend le long de l'axe longitudinal du câble et est disposé à l'extérieur du premier isolant dans le sens axial.

4. Câble selon l'une quelconque des revendications précédentes, comprenant en outre une deuxième couche d'isolant comprenant un deuxième fluoropolymère, dans lequel la deuxième couche d'isolant s'étend le long de l'axe longitudinal du câble et est disposée à l'extérieur du deuxième conducteur dans le sens axial.

5. Câble selon la revendication 4, dans lequel le deuxième fluoropolymère est constitué d'un troisième monomère ou est un copolymère comprenant un troisième monomère et un quatrième monomère, dans lequel
le troisième monomère est choisi dans un groupe constitué par le 1,1,2,2-tétrafluoroéthylène, le 1-fluoroéthylène, le 1,1-difluoroéthylène, le 1,2-difluoroéthylène, le 1,1,2-trifluoroéthylène, l'hexafluoropropène, l'éther vinylique de perfluoropropyle, l'éther vinylique de perfluoroéthyle, l'éther vinylique de perfluorométhyle, l'éther de perfluorobutyle, le 1-chloro-1,2,2-trifluoroéthylène, le 1,1-dichloro-2,2-difluoroéthylène, le 1,2-dichloro-1,2-difluoroéthylène, le 1,1,2-trichloro-2-fluoroéthylène et l'hexafluoropropylène, et
le quatrième monomère est choisi dans un groupe constitué par l'éthylène, le propylène, le 1,1,2,2-tétrafluoroéthylène, le 1-fluoroéthylène, le 1,1-difluoroéthylène, le 1,2-difluoroéthylène, le 1,1,2-trifluoroéthylène, l'hexafluoropropylène, l'éther vinylique de perfluoropropyle, l'éther vinylique de perfluoroéthyle, l'éther vinylique de perfluorométhyle, l'éther de perfluorobutyle, le 1-chloro-1,2,2-trifluoroéthylène, le 1,1-dichloro-2,2-difluoroéthylène, le 1,2-dichloro-1,2-difluoroéthylène, le 1,1,2-trichloro-2-fluoroéthylène et l'hexafluoropropylène,
de préférence dans lequel le deuxième fluoropolymère est le polytétrafluoroéthylène ou le poly(éthylène-co-tétrafluoroéthylène).

6. Câble selon la revendication 4 ou la revendication 5, comprenant en outre une couche barrière comprenant un troisième fluoropolymère, dans lequel la couche barrière s'étend le long de l'axe longitudinal du câble et est disposée à l'extérieur de la première et de la deuxième couche d'isolant dans le sens axial,
de préférence dans lequel le troisième fluoropolymère est constitué d'un cinquième monomère ou est un copolymère comprenant un cinquième monomère et un sixième monomère, dans lequel
le cinquième monomère est choisi dans un groupe constitué par le 1,1,2,2-tétrafluoroéthylène, le 1-fluoroéthylène, le 1,1-difluoroéthylène, le 1,2-difluoroéthylène, le 1,1,2-trifluoroéthylène, hexafluoropropène, l'éther vinylique de perfluoropropyle, l'éther vinylique de perfluoroéthyle, l'éther vinylique de perfluorométhyle, l'éther de perfluorobutyle, le 1-chloro-1,2,2-trifluoroéthylène, le 1,1-dichloro-2,2-difluoroéthylène, le 1,2-dichloro-1,2-difluoroéthylène, le 1,1,2-trichloro-2-fluoroéthylène et l'hexafluoropropylène, et
le sixième monomère est choisi dans un groupe constitué par l'éthylène, le propylène, le 1,1,2,2-tétrafluoroéthylène, le 1-fluoroéthylène, le 1,1-difluoroéthylène, le 1,2-difluoroéthylène, le 1,1,2-trifluoroéthylène, l'hexafluoropropylène, l'éther vinylique de perfluoropropyle, l'éther vinylique de perfluoroéthyle, l'éther vinylique de perfluorométhyle, l'éther de perfluorobutyle, le 1-chloro-1,2,2-trifluoroéthylène, le 1,1-dichloro-2,2-difluoroéthylène, le 1,2-dichloro-1,2-difluoroéthylène, le 1,1,2-trichloro-2-fluoroéthylène et l'hexafluoropropylène,
plus préférentiellement dans lequel le troisième fluoropolymère est le polytétrafluoroéthylène ou le poly(éthylène-co-tétrafluoroéthylène).

7. Câble selon l'une quelconque des revendications 4 à 6, comprenant en outre une couche de gaine comprenant un quatrième fluoropolymère, dans lequel la couche de gaine s'étend le long de l'axe longitudinal du câble et est disposée à l'extérieur de la deuxième couche d'isolant, ou à l'extérieur de la couche barrière si elle est présente, dans le sens axial,
de préférence dans lequel le quatrième fluoropolymère est constitué d'un septième monomère ou est un copolymère comprenant un septième monomère et un huitième monomère, dans lequel :
le septième monomère est choisi dans un groupe constitué par le 1,1,2,2-tétrafluoroéthylène, le 1-fluoroéthylène, le 1,1-difluoroéthylène, le 1,2-difluoroéthylène, le 1,1,2-trifluoroéthylène, l'hexafluoropropène, l'éther vinylique de perfluoropropyle, l'éther vinylique de perfluoroéthyle, l'éther vinylique de perfluorométhyle, l'éther de perfluorobutyle, le 1-chloro-1,2,2-trifluoroéthylène, le 1,1-dichloro 2,2-difluoroéthylène, le 1,2-dichloro-1,2-difluoroéthylène, le 1,1,2-trichloro-2-fluoroéthylène et l'hexafluoropropylène, et
le huitième monomère est choisi dans un groupe constitué par l'éthylène, le propylène, le 1,1,2,2-tétrafluoroéthylène, le 1-fluoroéthylène, le 1,1-difluoroéthylène, le 1,2-difluoroéthylène, le 1,1,2-trifluoroéthylène, l'hexafluoropropylène, l'éther vinylique de perfluoropropyle, l'éther vinylique de perfluoroéthyle, l'éther vinylique de perfluorométhyle, l'éther de perfluorobutyle, le 1-chloro-1,2,2-trifluoroéthylène, le 1,1-dichloro-2,2-difluoroéthylène, le 1,2-dichloro-1,2-difluoroéthylène, le 1,1,2-trichloro-2-fluoroéthylène et l'hexafluoropropylène,
plus préférentiellement dans lequel le quatrième fluoropolymère est le polytétrafluoroéthylène ou le poly(éthylène-co-tétrafluoroéthylène).

8. Câble selon l'une quelconque des revendications précédentes, comprenant en outre une deuxième pluralité de fils, dans lequel la deuxième pluralité de fils s'étend le long de l'axe longitudinal du câble et est disposée à l'extérieur de la première pluralité de fils dans le sens axial.

9. Câble selon la revendication 10, dans lequel les fils de la première pluralité de fils sont enroulés en spirale dans une première direction et les fils de la deuxième pluralité de fils sont enroulés en spirale dans une direction opposée à la première direction.

10. Câble selon l'une quelconque des revendications précédentes, dans lequel la deuxième pluralité de fils comprend un alliage comprenant du nickel.

11. Câble selon l'une quelconque des revendications précédentes, dans lequel la première pluralité de fils et/ou la deuxième pluralité de fils est constituée d'un alliage constitué de :
- nickel, chrome et, facultativement, jusqu'à 20 % en poids d'additifs ou d'impuretés ;
- 40 à 74 % en poids de nickel, 14 à 25 % en poids de chrome et, facultativement, jusqu'à 20 % en poids d'additifs ou d'impuretés ;
- 58 % en poids de nickel, 20 à 23 % en poids de chrome, 5 % en poids de fer, 8 à 10 % en poids de molybdène, 3,15 à 4,15 % en poids de niobium, 1 % en poids de cobalt, 0,5 % en poids de manganèse, 0,4 % en poids d'aluminium, 0,4 % en poids de titane, le reste étant des impuretés ou des additifs ;
- 72 % en poids de nickel, 14 à 17 % en poids de chrome, 6 à 10 % en poids de fer, 1 % en poids de manganèse, 0,5 % en poids de cuivre, le reste étant des impuretés ou des additifs ;
- 44,2 à 56 % en poids de nickel, 20 à 24 % en poids de chrome, 3 % en poids de fer, 8 à 10 % en poids de molybdène, 10 à 15 % en poids de cobalt, 0,5 % en poids de manganèse, 0,5 % en poids de cuivre, 0,8 à 1,5 % en poids d'aluminium, 0,6 % en poids de titane, le reste étant des impuretés ou des additifs ;
- 50 à 55 % en poids de nickel, 17 à 21 % en poids de chrome, 2,8 à 3,3 % en poids de molybdène, 4,75 à 5,5 % en poids de niobium, 1 % en poids de cobalt, 0,35 % en poids de manganèse, 0,2 à 0,8 % en poids d'aluminium, 0,65 à 1,15 % en poids de titane, 0,3 % en poids de cuivre, le reste étant des impuretés ou des additifs ; ou
- 70 % en poids de nickel, 14 à 17 % en poids de chrome, 5 à 9 % en poids de fer, 0,7 à 1,2 % en poids de niobium, 1 % en poids de cobalt, 1 % en poids de manganèse, 0,5 % en poids de cuivre, 0,4 à 1 % en poids d'aluminium, 2,25 à 2,75 % en poids de titane, le reste étant des impuretés ou des additifs,
facultativement, dans lequel les additifs ou impuretés sont choisis parmi le fer, le molybdène, le niobium, le cobalt, le manganèse, le cuivre, l'aluminium, le titane, le silicium, le carbone, le soufre, le phosphore ou le bore, ou une combinaison quelconque de ces éléments.

12. Procédé de fabrication d'un câble selon l'une quelconque des revendications 1 à 11, comprenant :
la disposition de la première couche d'isolant autour du premier conducteur et le long d'un axe longitudinal de celui-ci, et
la disposition de la première pluralité de fils autour de la première couche d'isolant et le long d'un axe longitudinal de celle-ci,
dans lequel la première couche d'isolant comprend le premier fluoropolymère.

13. Procédé de transmission d'électricité, comprenant la mise en place d'une première installation ou d'un premier dispositif et d'une deuxième installation ou d'un deuxième dispositif reliés par un câble selon l'une quelconque des revendications 1 à 11, et la transmission d'électricité depuis la première installation ou le premier dispositif à la deuxième installation ou au deuxième dispositif par le biais du câble, dans lequel la première installation ou le premier dispositif se trouve dans un puits de forage, et
facultativement, comprenant en outre la descente du premier dispositif ou de la première installation dans le puits de forage en réduisant une traction appliquée au câble et/ou la remontée du premier dispositif ou de la première installation hors du puits de forage en augmentant la traction appliquée au câble.

14. Procédé de suspension d'un premier dispositif ou d'une première installation dans un puits de forage, comprenant la mise en place d'un câble selon l'une quelconque des revendications 1 à 11, la fixation d'une première extrémité du câble au premier dispositif ou à la première installation, la fixation d'une deuxième extrémité du câble à un deuxième dispositif ou à une deuxième installation, et la suspension du premier dispositif ou de la première installation dans le puits de forage, et
facultativement, comprenant en outre la transmission d'électricité depuis la première installation ou le premier dispositif à la deuxième installation ou au deuxième dispositif par le biais du câble.
